# EUROPÄISCHE PATENTSCHRIFT

(11) **EP 3 261 738 B1**
(45) Veröffentlichungstag und Bekanntmachung des Hinweises auf die Patenterteilung: **24.04.2019**
(21) Anmeldenummer: 16706346.0
(22) Anmeldetag: 23.02.2016
(51) Int. Cl.: B01D 3/00, B01D 3/20, C01B 33/04, C01B 33/107

(54) **KOLONNE UND VERFAHREN ZUR DISPROPORTIONIERUNG VON CHLORSILANEN ZU MONOSILAN UND TETRACHLORSILAN SOWIE ANLAGE ZUR GEWINNUNG VON MONOSILAN**
COLUMN AND PROCESS FOR DISPROPORTIONATION OF CHLOROSILANES INTO MONOSILANE AND TETRACHLOROSILANE AND ALSO PLANT FOR RECOVERY OF MONOSILANE
COLONNE ET PROCÉDÉ POUR LA DISMUTATION DE CHLOROSILANES EN MONOSILANE ET EN TÉTRACHLOROSILANE AINSI QU'INSTALLATION POUR L'OBTENTION DE MONOSILANE

(30) Priorität: 27.02.2015 DE 102015203618
(43) Veröffentlichungstag der Anmeldung: 03.01.2018
(73) Patentinhaber: Schmid Silicon Technology GmbH, 72250 Freudenstadt (DE)
(72) Erfinder: SCHMID, Christian, 72250 Freudenstadt (DE); HAHN, Jochem, 72108 Rottenburg am Neckar (DE); FUHRMANN, Christian Andreas, 72401 Haigerloch-Weildorf (DE)
(74) Vertreter: Patentanwaltskanzlei Cartagena
(86) Internationale Anmeldenummer: PCT/EP2016/053800
(87) Internationale Veröffentlichungsnummer: WO 2016/135159

(56) Entgegenhaltungen:
- EP-A1- 1 016 439
- DE-A1- 10 017 168
- DE-A1-102009 032 833
- DE-B3-102009 037 154

## Beschreibung

Die vorliegende Erfindung betrifft eine Kolonne und ein Verfahren zur Disproportionierung von Chlorsilanen zu Monosilan und Tetrachlorsilan bei gleichzeitiger rektifikativer Auftrennung der dabei erhaltenen Silane. Weiterhin betrifft die Erfindung eine Anlage zur Gewinnung von Monosilan mit einer solchen Kolonne.

Hochreines Silizium zur Herstellung von Halbleiterelementen und Solarzellen wird in der Regel in einem mehrstufigen Prozess ausgehend von metallurgischem Silizium, das in der Regel einen relativ hohen Anteil an Verunreinigungen aufweist, hergestellt. Zur Aufreinigung des metallurgischen Siliziums kann dieses beispielsweise in ein Trihalogensilan wie Trichlorsilan (SiHCl₃) überführt werden, das anschließend thermisch zu hochreinem Silizium zersetzt wird. Eine derartige Vorgehensweise ist beispielsweise aus der DE 29 19 086 A1 bekannt.

Eine Weiterentwicklung dieses Verfahrens geht auf die Firma Union Carbide Corp. zurück und ist in der DE 33 11 650 A1 beschrieben. Gemäß diesem Verfahren wird Trichlorsilan nicht unmittelbar zersetzt. Stattdessen wird es einer Disproportionierung unterworfen, wobei man als Endprodukte Monosilan (SiH₄) und Tetrachlorsilan (SiCl₄) erhält. An Stelle des Trichlorsilans wird dann das erhaltene Monosilan thermisch zersetzt. Vorteilhafterweise entstehen bei der Zersetzung als Zersetzungsprodukte nahezu ausschließlich metallisches Silizium und Wasserstoff (H₂). Die Zersetzung von Trichlorsilan führt dagegen zu hochkorrosiven Verbindungen wie Chlorwasserstoff (HCl).

Um die Disproportionierung von Chlorsilanen wie Trichlorsilan zu beschleunigen, können Katalysatoren eingesetzt werden. Besonders bewährt haben sich basische Katalysatoren wie zum Beispiel die aus der DE 25 07 864 A1 bekannten Aminverbindungen. Diese werden bevorzugt in gebundener Form eingesetzt, wie es zum Beispiel in der DE 33 11 650 A1 beschrieben ist. An feste Träger gebundene Katalysatoren sind auf einfache Weise aus flüssigen oder gasförmigen Reaktionsgemischen abzutrennen. Heute werden deshalb bei der technischen Disproportionierung von Chlorsilanen praktisch ausschließlich entweder an Träger fixierte oder in vernetzte Polymere eingebettete Aminkatalysatoren verwendet.

Unter anderem aus der DE 198 60 146 A1 oder der DE 10 2009 037 154 B3 ist es bekannt, die Disproportionierung von Trichlorsilan nach dem Prinzip der Reaktivdestillation ablaufen zu lassen. Eine Reaktivdestillation ist durch eine Kombination von Reaktion und destillativer, insbesondere rektifikativer Trennung in einer Kolonne gekennzeichnet. Das Trichlorsilan kann innerhalb einer solchen Kolonne an einem geeigneten Katalysator disproportioniert werden, während gleichzeitig aus der Disproportionierung resultierende leichtsiedende Produkte destillativ, insbesondere rektifikativ, aus der Kolonne entfernt werden. Bei einer Disproportionierung in einem geschlossenen Reaktionsgefäß ist die Reaktionsausbeute durch ein sich einstellendes chemisches Gleichgewicht beschränkt. Bei einer Reaktivdestillation kommt es hingegen in Folge der fortlaufenden Entfernung von leichtsiedenden Produkten zu einer steten Gleichgewichtsverschiebung, was die Reaktionsausbeute bei der Disproportionierung erhöht und die Effizienz des Gesamtprozesses steigert.

Eine für die Reaktivdestillation geeignete Kolonne ist aus der EP 1 016 439 A1 bekannt. In der beschriebenen Kolonne passiert ein Gasstrom räumlich getrennt von einem Flüssigkeitsstrom ein Katalysatorbett. Der Gasstrom wird hierbei durch einen zentralen Gasbypass geführt.

Aus der DE 100 17 168 A1 ist es bekannt, innerhalb einer Kolonne mehrere reaktiv/destillative Reaktionsbereiche übereinander anzuordnen. Zwischen den Bereichen ist dabei ein Kondensator angeordnet, um ein monosilanhaltiges Produktgemisch von vergleichsweise schwer siedenden Chlorsilanen abzutrennen. Diese Verfahrensvariante ist apparativ relativ aufwendig, gewährleistet jedoch, dass höher gelegene Reaktionsbereiche nicht zu sehr mit schwer siedenden Chlorsilanen belastet werden.

Aus der DE 10 2009 032 833 A1 ist eine Reaktionskolonne zur Disproportionierung von Monosilan bekannt, in der zwei reaktiv/destillative Reaktionsbereiche übereinander angeordnet sind. Die beiden Reaktionsbereiche werden bei unterschiedlichen Temperaturen betrieben und enthalten auch unterschiedlich katalytisch wirkende Feststoffe, wobei für den unteren Reaktionsbereich Feststoffe gewählt werden, die thermisch beständiger sind als die für den oberen Reaktionsbereich vorgesehenen Feststoffe. Eine nur über den Kolonnensumpf beheizte Kolonne lässt sich infolgedessen bei vergleichsweise hohen Temperaturen betreiben, da weniger Rücksicht auf die thermische Stabilität des Katalysators im unteren Reaktionsbereich genommen werden muss. Die Geschwindigkeit der Disproportionierung kann auf diese Weise gesteigert werden.

Der vorliegenden Erfindung lag die Aufgabe zugrunde, die bekannten technischen Lösungen zur Disproportionierung von Chlorsilanen, insbesondere von Trichlorsilan, zu verbessern. Gesucht wurde eine technische Lösung, die sich durch hohe Energieeffizienz und hohe Ausbeuten sowie durch eine Realisierbarkeit in einer Anlage mit möglichst einfachem apparativem Aufbau auszeichnet. Diese Aufgabe wird gelöst durch die Kolonne mit den Merkmalen des Anspruchs 1 und das Verfahren mit den Merkmalen des Anspruchs 15. Bevorzugte Ausführungsformen der erfindungsgemäßen Kolonne sind in den abhängigen Ansprüchen 2 bis 14 angegeben. Eine bevorzugte Ausführungsform des erfindungsgemäßen Verfahrens ist im abhängigen Anspruch 16 definiert. Darüber hinaus ist auch die Anlage mit den Merkmalen des Anspruchs 14 von der vorliegenden Erfindung umfasst. Der Wortlaut sämtlicher Ansprüche wird hiermit durch Bezugnahme zum Inhalt dieser Beschreibung gemacht.

Die erfindungsgemäße Kolonne arbeitet wie die aus der DE 198 60 146 A1, der DE 100 17 168 A1 und der DE 10 2009 032 833 A1 bekannten Kolonnen nach dem Prinzip der Reaktivdestillation. Sie umfasst wie die bislang zur Disproportionierung von Chlorsilanen verwendeten Kolonnen einen Kolonnenkopf, einen Kolonnensumpf und einen dazwischen angeordneten rohrförmigen Kolonnenmantel. Der Kolonnenkopf bildet in aller Regel den höchsten Punkt der Kolonne. Die bevorzugte Ausrichtung der Kolonne ist senkrecht.

In aller Regel wird sie kontinuierlich betrieben. Zu diesem Zweck kann sie portionsweise oder kontinuierlich mit Chlorsilanen beschickt werden. Die Abführung von bei der Disproportionierung entstehendem Monosilan aus der Kolonne erfolgt in der Regel kontinuierlich. Gebildetes Tetrachlorsilan kann kontinuierlich oder in regelmäßigen Abständen dem Kolonnensumpf entnommen werden.

Bevorzugt dient als Ausgangsprodukt der Disproportionierung - wie bei den eingangs beschriebenen Verfahren - Trichlorsilan. Dieses disproportioniert gemäß dem folgenden Reaktionsschema:

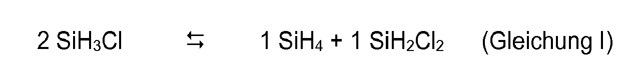

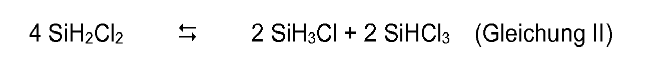

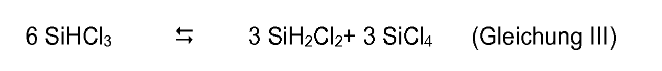

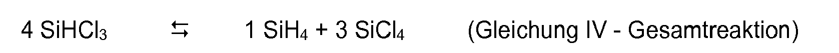

Wie dem Schema zu entnehmen ist, erfolgt die Umwandlung von Trichlorsilan zu Monosilan über zwei Zwischenstufen, nämlich über Dichlorsilan (SiH₂Cl₂) und Monochlorsilan (SiH₃Cl). Die Ausbeuten bei der Bildung dieser Zwischenstufen und bei der Bildung des Endprodukts, Monosilan, hängen, wie eingangs bereits erwähnt, von den jeweiligen Gleichgewichtszuständen ab, die sich unter den in der Kolonne herrschenden Bedingungen einstellen. Durch permanentes Entfernen von Produkten aus den Reaktionsgleichgewichten können diese Gleichgewichte allerdings in die gewünschte Richtung verschoben werden. Genau dies erfolgt in der erfindungsgemäßen Kolonne durch stete rektifikative Auftrennung der erhaltenen Silane bzw. Silangemische.

Grundsätzlich können an Stelle von Trichlorsilan auch Monochlor- und/oder Dichlorsilan als Ausgangsprodukt der Disproportionierung dienen oder in Kombination mit Trichlorsilan eingesetzt werden. Insbesondere Dichlorsilan steht in Betrieben, die Silizium auf klassische Weise durch thermische Zersetzung von Trichlorsilan gewinnen, in großen Mengen zur Verfügung. Es fällt dort als Nebenprodukt bei der Zersetzung an.

Die Siedepunkte der in der Kolonne auftretenden Silane unterscheiden sich teilweise sehr stark. Der Siedepunkt von Monosilan beträgt bei Normaldruck -112°C, wohingegen der Siedepunkt von Tetrachlorsilan 57°C beträgt. Die Zwischenprodukte Monochlorsilan und Dichlorsilan weisen Siedepunkte von -30°C und 8°C auf (ebenfalls bei Normaldruck). Der Siedepunkt von Trichlorsilan beträgt bei Normaldruck 32°C. In der erfindungsgemäßen Kolonne wirkt sich die große Siedepunktdifferenz zwischen Monosilan und Monochlorsilan besonders günstig aus. Diese ermöglicht es, Monosilan in der Kolonne effizient abzutrennen.

Der Kolonnenmantel der erfindungsgemäßen Kolonne ist bevorzugt hohlzylindrisch ausgebildet. Innerhalb des Mantels unterscheidet sich die erfindungsgemäße Kolonne sehr deutlich von allen aus dem Stand der Technik bekannten Kolonnen, die bislang für die reaktiv/destillative Umsetzung von Chlorsilanen eingesetzt wurden. Sie umfasst innerhalb des Kolonnenmantels und entlang der Kolonnenachse mehrere (mindestens zwei) übereinander liegende Reaktionszonen sowie mehrere (mindestens zwei) der rektifikativen Auftrennung dienende Trennzonen, wobei die Reaktionszonen und die Trennzonen entlang der Kolonnenachse alternierend angeordnet sind. Mit anderen Worten, zwischen benachbarten Reaktionszonen ist stets eine Trennzone angeordnet und zwischen benachbarten Trennzonen stets eine Reaktionszone.

In den Reaktionszonen ist jeweils ein Katalysatorbett angeordnet. In diesen erfolgt die beschriebene Chlorsilan-Disproportionierung gemäß den Gleichungen I bis III. Bei jeder der Gleichungen kommt es hierbei zur Bildung leichter und vergleichsweise schwerer siedender Silane, wobei die Begriffe leicht siedend und schwer siedend dabei relativ zu verstehen sind. So werden beispielsweise bei der Disproportionierung von Dichlorsilan Trichlor- und Monochlorsilan gebildet, wobei Trichlorsilan hierbei die schwer siedende und Monochlorsilan die leicht siedende Komponente ist. Bei der Disproportionierung von Monochlorsilan entsteht Monosilan und Dichlorsilan, wobei hier Monosilan die leicht siedende und Dichlorsilan die schwer siedende Komponente ist.

Unter Berücksichtigung der Tatsache, dass die Disproportionierung von Monochlorsilan statistisch gesehen innerhalb der Kolonne "oberhalb" der Disproportionierung von Dichlorsilan erfolgt, ist klar, dass die schwer siedenden Silane, gegebenenfalls nach Kondensation, innerhalb der Kolonne einen nach unten gerichteten Flüssigkeitsstrom ausbilden, während die leicht siedenden Silane innerhalb der Kolonne einen aufsteigenden Gasstrom ausbilden. Monosilan strebt als leichtestes Produkt ohnehin in Richtung des Kolonnenkopfes und Tetrachlorsilan als schwerstes Produkt in Richtung des Kolonnensumpfes.

Besonders bevorzugt zeichnet sich die erfindungsgemäße Kolonne dadurch aus, dass die Trennzonen und die Reaktionszonen derart ausgebildet sind, dass sich der Gasstrom und der Flüssigkeitsstrom in den Trennzonen begegnen, während in den Reaktionszonen der nach unten gerichtete Flüssigkeitsstrom durch die Katalysatorbetten geführt wird, wohingegen der nach oben gerichtete Gasstrom - räumlich getrennt vom Flüssigkeitsstrom - die Katalysatorbetten passiert. Mit anderen Worten, während sich der Gasstrom und der Flüssigkeitsstrom in den Trennzonen begegnen, werden sie getrennt voneinander durch die Reaktionszonen geführt.

Das Design der erfindungsgemäßen Kolonne hat sich gegenüber klassischen Bauweisen als überlegen erwiesen. Besonders die Kombination aus alternierender Anordnung der Reaktions-und der Trennzonen sowie der gezielten Separierung von Gas- und Flüssigkeitsströmen in den Reaktionszonen bewirkt eine deutlich höhere Leistungsfähigkeit der Kolonne hinsichtlich Ausbeuten und Reaktionsgeschwindigkeit. Darüber hinaus ist auch der Energiebedarf zur Disproportionierung geringer als bei aus dem Stand der Technik bekannten Disproportionierungen. Es wird vermutet, dass zum einen die Disproportionierungsreaktion in einer erfindungsgemäßen Kolonne effizienter verläuft, da die Kontaktierung der umzusetzenden Chlorsilane mit dem Katalysator nicht von aufsteigendem Gas behindert wird. Zudem scheint die rektifikative Auftrennung durch die alternierende Anordnung der Trenn- und Reaktionszonen effizienter zu verlaufen.

Eine erfindungsgemäße Kolonne umfasst in bevorzugten Ausführungsformen innerhalb des Kolonnenmantels und entlang der Kolonnenachse zwischen 2 und 12 Reaktionszonen, besonders bevorzugt zwischen 4 und 7 Reaktionszonen, insbesondere 5 Reaktionszonen. Die oberste Reaktionszone ist bevorzugt zwischen zwei Trennzonen angeordnet, eine davon befindet sich oberhalb der Reaktionszone und die andere unterhalb.

Weiterhin umfasst die erfindungsgemäße Kolonne in bevorzugten Ausführungsformen innerhalb des Kolonnenmantels und entlang der Kolonnenachse zwischen 3 und 13 Trennzonen, besonders bevorzugt zwischen 4 und 8 Trennzonen, insbesondere 6 Trennzonen.

Bevorzugt weisen die Reaktionszonen jeweils mindestens einen Gasdurchlass, bevorzugt einen rohrförmigen Gasdurchlass, auf, durch welchen der Gasstrom das in den Reaktionszonen angeordnete Katalysatorbett ungehindert von unten nach oben passieren kann. Der Gasdurchlass weist an seinem unteren Ende einen Einlass und an seinem oberen Ende einen Auslass für aufsteigendes Gas auf. Durch eine Sperre kann verhindert werden, dass aus einer oberhalb des Durchlasses angeordneten Trennzone herabströmende Flüssigkeit in den für den aufsteigenden Gasstrom vorgesehenen Auslass eintritt.

In besonders bevorzugten Ausführungsformen handelt es sich bei dem Gasdurchlass um ein Rohr, dessen Achse mit der Kolonnenachse zusammenfällt. Es können jedoch zusätzlich oder alternativ auch mehrere Rohre vorgesehen sein, die um die Kolonnenachse herum angeordnet sind.

Oberhalb des Auslasses ist in bevorzugten Ausführungsformen ein Gasverteiler für das durch den Gasdurchlass nach oben strömende Gas angeordnet, damit eine gegebenenfalls oberhalb der Reaktionszone angeordnete Trennzone mit möglichst großem Querschnitt angeströmt werden kann. Dieser Gasverteiler kann auch die Funktion der erwähnten Sperre erfüllen.

Die in den Reaktionszonen angeordneten Katalysatorbetten sind bevorzugt ringförmig um die Kolonnenachse, insbesondere ringförmig um die rohrförmigen Gasdurchlässe, angeordnet. Im Idealfall füllen sie den Raum zwischen den rohrförmigen Gasdurchlässen und dem Kolonnenmantel vollständig aus. Sofern mehrere Rohre vorgesehen sind, die um die Kolonnenachse herum angeordnet sind, so erstrecken sich die Katalysatorbetten bevorzugt über den gesamten Querschnitt der Kolonne, lediglich unterbrochen durch die Rohre, die durch die Katalysatorbetten hindurch geführt sind.

Die Katalysatorbetten sind mindestens teilweise mit einem die dort erfolgende Disproportionierungsreaktion unterstützenden Katalysator befüllt. Betreffend die Art und Zusammensetzung des Katalysators kann auf den eingangs erwähnten Stand der Technik verwiesen werden.

Erfindungsgemäß umfasst die erfindungsgemäße Kolonne ein Mittel, mit dem der durch die Katalysatorbetten geführte Flüssigkeitsstrom kontrolliert gestaut werden kann. Dies ist insoweit von Bedeutung, als der in den Katalysatorbetten angeordnete Katalysator im Idealfall stets von einer flüssigen Silanmischung umgeben ist.

Im Katalysatorbett gestaute Flüssigkeit kann auf unterschiedlichen Wegen in die darunterliegende Trennzone überführt werden. Erfindungsgemäß sind in den Böden der Katalysatorbetten Abläufe angeordnet, durch die Flüssigkeit in die tiefer liegende Trennzone ablaufen kann. In diesen Fällen sollten allerdings Vorkehrungen getroffen werden, dass in die Abläufe kein aus den Trennzonen nach oben strömendes Gas eindringen kann. Zu diesem Zweck können die Abläufe beispielsweise siphonartig ausgebildet sein.

Alternativ umfasst die erfindungsgemäße Kolonne zumindest für jede über einer Trennzone angeordnete Reaktionszone eine Rohrleitung, über die gestaute Flüssigkeit aus dem Katalysatorbett dieser Reaktionszone in die darunterliegende Trennzone überführt werden kann.

Diese Rohrleitung kann außerhalb und innerhalb des Kolonnenmantels geführt sein, wobei es in vielen Fällen bevorzugt ist, dass zumindest ein Teilabschnitt dieser Rohrleitung, gegebenenfalls auch die ganze Rohrleitung, außerhalb des Kolonnenmantels angeordnet ist.

In den Bodenbereich des Katalysatorbetts ist ein Ablauf eingebracht, an den die Rohrleitung angeschlossen ist und über den sie mit der gestauten Flüssigkeit gespeist wird. Im Hinblick darauf, dass eine vertikale Strömungsbewegung durch das Katalysatorbett hindurch als vorteilhaft angesehen wird, ist die Anordnung des Ablaufs im Bodenbereich erfindungsgemäß vorgesehen. Darüber hinaus wird davon ausgegangen, dass sich bei der Disproportionierung bildende Schwersieder im Bodenbereich des Katalysatorbetts sammeln. Gerade diese sollen innerhalb der Kolonne nach unten befördert werden.

In einer besonders bevorzugten Ausführungsform steigt die Rohrleitung zunächst in Richtung des Kolonnenkopfes an, bevor sie die Richtung wechselt, insbesondere einen Bogen in Form eines umgekehrten "U", beschreibt, und in Richtung der darunterliegenden Trennzone (und damit auch in Richtung des Kolonnensumpfes) abfällt. Gemeinsam mit dem Katalysatorbett mit dem Ablauf im Bodenbereich bildet eine derart ausgebildete Rohrleitung eine siphonartige Anordnung. Der Boden des Katalysatorbetts bildet dabei vorzugsweise den tiefsten Punkt des Siphons, der Bogen dessen Auslass.

Über die Höhe des Bogens lässt sich der Flüssigkeitspegel innerhalb des Katalysatorbetts steuern. Insoweit handelt es sich bei der Rohrleitung und der siphonartigen Anordnung um eine bevorzugte Ausführungsform des erwähnten Mittels zum kontrollierten Stauen des Flüssigkeitsstroms in den Katalysatorbetten.

In besonders bevorzugte Ausführungsformen ist die Rohrleitung über eine Verbindungsleitung mit dem Kolonneninnenraum oberhalb des Katalysatorbetts verbunden, aus dem sie mit Flüssigkeit gespeist wird, insbesondere mit dem Kolonneninnenraum unmittelbar oberhalb des Katalysatorbetts, in den auch der rohrförmige Gasdurchlass, durch welchen der Gasstrom das Katalysatorbett passieren kann, mündet (Gasraum). Über diese Verbindungsleitung kann gegebenenfalls ein Druckausgleich herbeigeführt werden, um ein Leersaugen des Katalysatorbetts zu verhindern. Besonders bevorzugt zweigt die Verbindungsleitung vom oberen Ende des Bogens ab, insbesondere senkrecht nach oben.

Es ist bevorzugt, dass die erfindungsgemäße Kolonne mindestens für jede unterhalb einer Reaktionszone angeordnete Trennzone einen Verteiler für den nach unten gerichteten Flüssigkeitsstrom (Flüssigkeitsverteiler) umfasst, damit diese Trennzonen mit möglichst großem Querschnitt angeströmt werden können. Bevorzugt sind diese Verteiler unmittelbar oberhalb der Trennzonen angeordnet. Flüssigkeitsverteiler für Kolonnen sind aus dem Stand der Technik bekannt. Übliche Verteiler weisen einen zentralen Kanal auf, in den die zu verteilende Flüssigkeit eingespeist wird, an welchen wiederum eine Vielzahl meist quer zu dem zentralen Kanal verlaufender kleinerer Verteilerkanäle angebracht ist. Die Verteilerkanäle weisen dabei Austrittsöffnungen auf, aus denen die zu verteilende Flüssigkeit tropfenweise austreten kann.

In bevorzugten Ausführungsformen ist der Flüssigkeitsverteiler über die beschriebene Rohrleitung mit dem Katalysatorbett der darüber angeordneten Reaktionszone verbunden. Der Flüssigkeitsverteiler wird somit bevorzugt mit Flüssigkeit aus dem Katalysatorbett der unmittelbar darüber angeordneten Reaktionszone gespeist.

Grundsätzlich ist es auch möglich, den Gas- und den Flüssigkeitsstrom in den Reaktionszonen zu trennen, indem der Flüssigkeitsstrom über ein Ablaufrohr aus den Katalysatorbetten in die unter den Reaktionszonen angeordneten Trennzonen geführt wird, wohingegen der Gasstrom räumlich getrennt vom Flüssigkeitsstrom und den Katalysatorbetten über eine oder mehrere Rohrleitungen von unten nach oben an den Katalysatorbetten vorbeigeführt wird. In einigen bevorzugten Ausführungsformen weisen die Reaktionszonen einer erfindungsgemäßen Kolonne daher mindestens eines der folgenden Merkmale auf:
- Sie weisen jeweils mindestens eine Ableitung auf, durch welche der Flüssigkeitsstrom aus den Katalysatorbetten in unter den Reaktionszonen angeordnete Trennzonen abfließen kann.
- Bei der mindestens einen Ableitung handelt es sich bevorzugt um ein Ablaufrohr, insbesondere um ein Ablaufrohr, dessen Achse mit der Kolonnenachse zusammenfällt.
- Das Ablaufrohr wird ringförmig vom Katalysatorbett der jeweiligen Reaktionszone umschlossen.
- Das Ablaufrohr ist als Doppelrohr ausgebildet mit einem inneren Rohr, einem äußeren Rohr und einem durch den Außendurchmesser des inneren Rohrs und den Innendurchmesser des äußeren Rohrs definierten Ringspalt, wobei das äußere Rohr an seinem oberen Ende geschlossen ist, während das obere Ende des inneren Rohrs offen und über den Ringspalt mit dem Katalysatorbett der jeweiligen Reaktionszone in kommunizierender Verbindung steht.
- Zumindest ein Teilabschnitt der Rohrleitungen, über die der Gasstrom am Katalysatorbett der jeweiligen Reaktionszone vorbei in die oberhalb der Reaktionszone angeordnete Trennzone geführt werden kann, ist außerhalb des Kolonnenmantels angeordnet.

Gemeinsam mit dem Katalysatorbett bildet auch das erwähnte Doppelrohr eine siphonartige Anordnung. Der Boden des Katalysatorbetts bildet dabei vorzugsweise den tiefsten Punkt des Siphons, das obere Ende des inneren Rohrs dessen Auslass.

Bevorzugt sind innerhalb der Trennzonen jeweils Einbauten zur Intensivierung des Wärme- und Stoffaustauschs zwischen den sich begegnenden Gas- und Flüssigkeitsströmen angeordnet. Bevorzugt handelt es sich bei diesen Einbauten um strukturierte Packungen. Hierbei handelt es sich bekanntlich um Einbauten aus meist dünnen, gewellten und/oder gelochten Metallplatten oder Metallnetzen in regelmäßiger Anordnung. Die Struktur der Packung soll einen optimalen Austausch zwischen gasförmiger und flüssiger Phase bei minimalem Druckwiderstand gewährleisten.

Alternativ oder zusätzlich zu den strukturierten Packungen können die Trennzonen einer erfindungsgemäßen Kolonne auch Füllkörper in loser Schüttung enthalten. Bekannte Füllkörper sind beispielsweise Raschig-Ringe oder Füllkörper mit Sattel- oder Kugelform. Eine weitere Alternative zu den strukturierten Packungen in den Trennzonen sind Sieb-, Glocken- und Ventilböden.

In aller Regel ist dem Kolonnensumpf einer erfindungsgemäßen Kolonne ein Heizelement zugeordnet. Dieses kann in die Kolonne integriert sein oder als externes Heizelement vorliegen, wobei im letzteren Fall bevorzugt ist, dass Chlorsilane im Umlaufverfahren aus dem Kolonnensumpf zu dem Heizelement und von diesem zurück in den Kolonnensumpf überführt werden.

Gegebenenfalls umfasst die erfindungsgemäße Kolonne in aller Regel ein Kühlelement, das innerhalb des Kolonnenkopfs angeordnet oder mit diesem verbunden ist. Bei diesem kann es sich beispielsweise um einen Kondensator handeln.

Der Vollständigkeit halber erwähnt sei hiermit noch, dass die erfindungsgemäße Kolonne selbstverständlich mindestens einen Zulauf für das zu disproportionierende Chlorsilan oder Chlorsilangemisch, mindestens einen Auslass für bei der Disproportionierung entstehendes Tetrachlorsilan und mindestens einen vorzugsweise im Bereich des Kolonnenkopfs angeordneten Auslass für bei der Disproportionierung entstehendes Monosilan umfasst.

Eine erfindungsgemäße Anlage zur Gewinnung von Monosilan umfasst eine erfindungsgemäße Kolonne zur Disproportionierung von Chlorsilanen sowie wahlweise einen der Kolonne nachgeschalteten Kondensator, eine der Kolonne nachgeschaltete Rektifikationseinrichtung oder eine Kombination aus dem nachgeschalteten Kondensator und der Rektifikationseinrichtung.

Ein Kondensator kann insbesondere dann vorgesehen sein, wenn dem Kopf der erfindungsgemäßen Kolonne weder ein Kühlelement zugeordnet ist noch ein Kühlelement im Kolonnenkopf integriert ist. In diesem Fall kann es zweckmäßig sein, der Kolonne einen Kondensator nachzuschalten, um Komponenten mit höheren Siedepunkten als Monosilane möglichst effizient abzutrennen.

Da die Reinheit des Monosilans sich unmittelbar auf die Qualität des Siliziums, das durch Zersetzung des Monosilans gewonnen wird, auswirkt, ist es in aller Regel bevorzugt, das aus der Disproportionierung gewonnene Monosilan mittels Rektifikation aufzuarbeiten. Hierzu dient die erwähnte Rektifikationseinrichtung.

Das erfindungsgemäße Verfahren dient wie die erfindungsgemäße Kolonne zur Disproportionierung von Chlorsilanen zu Monosilan und Tetrachlorsilan bei gleichzeitiger rektifikativer Auftrennung dabei erhaltener Silane. Im Wesentlichen zeichnet sich das erfindungsgemäße Verfahren durch die folgenden Merkmale aus:
- Es wird in einer Kolonne durchgeführt, in der, entlang der Kolonnenachse, für die Disproportionierung vorgesehene Reaktionszonen und der rektifikativen Auftrennung dienende Trennzonen alternierend angeordnet sind,
- in den Reaktionszonen angeordnete Katalysatorbetten werden mit einem die Disproportionierung katalysierenden Katalysator befüllt,
- Chlorsilane werden in den Katalysatorbetten mittels des Katalysators zu leicht siedenden Silanen, die innerhalb der Kolonne einen aufsteigenden Gasstrom ausbilden, sowie zu vergleichsweise schwer siedenden Silanen, die innerhalb der Kolonne einen nach unten gerichteten Flüssigkeitsstrom ausbilden, disproportioniert,
- der Gasstrom und der Flüssigkeitsstrom werden derart durch die Kolonne geführt, dass sie sich in den Trennzonen begegnen, während in den Reaktionszonen der Flüssigkeitsstrom von oben nach unten durch die Katalysatorbetten geführt wird und der Gasstrom, räumlich getrennt vom Flüssigkeitsstrom, von unten nach oben die Katalysatorbetten passiert,
- Der durch die Katalysatorbetten geführte Flüssigkeitsstrom wird in den Katalysatorbetten kontrolliert gestaut wird, und
- in den Katalysatorbetten gestaute Flüssigkeit wird entweder über Abläufe in den Böden der Katalysatorbetten oder über Rohrleitungen, die an in die Bodenbereiche der Katalysatorbetten eingebrachte Abläufe angeschlossen sind, in eine darunter liegende Trennzone überführt.

Die Kolonne, in der das erfindungsgemäße Verfahren durchgeführt wird, ist bevorzugt eine Ausführungsform der oben beschriebenen erfindungsgemäßen Kolonne.

Beheizt wird die verwendete Kolonne vorzugsweise lediglich über das oben erwähnte, dem Kolonnensumpf zugeordnete Heizelement. Die Temperatur in den Katalysatorbetten wird dabei bevorzugt auf einen Wert zwischen 10 °C und 200 °C, bevorzugt zwischen 20 °C und 150 °C, insbesondere auf einen Wert zwischen 30 und 120 °C, eingestellt. Der jeweils höhere Temperaturwert wird dabei bevorzugt in der jeweils am tiefsten angeordneten Reaktionszone erreicht, der jeweils niedrigere in der jeweils am höchsten angeordneten Reaktionszone. Der Druck innerhalb der Kolonne wird bevorzugt auf einen Wert zwischen 1 bar und 32 bar, bevorzugt zwischen 1,5 bar (g) und 15 bar (g), insbesondere auf einen Wert zwischen 2 bar (g) und 5 bar (g), eingestellt.

Weitere Merkmale und Vorteile der beschriebenen Erfindung ergeben sich aus den nachfolgend beschriebenen Zeichnungen bevorzugter Ausführungsformen.

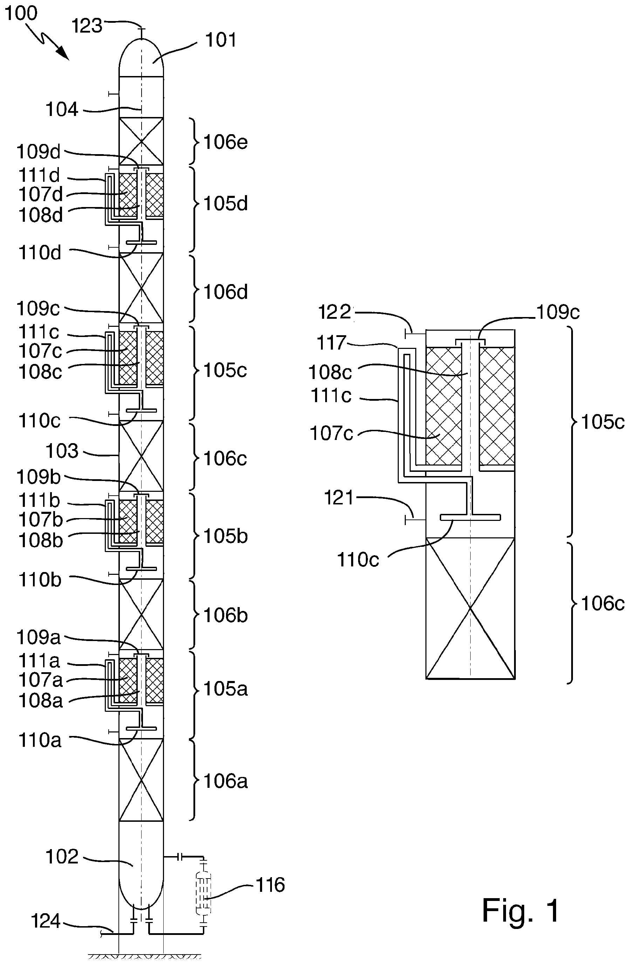

In Fig. 1 ist schematisch eine bevorzugte Ausführungsform einer erfindungsgemäßen Kolonne 100 im Längsschnitt dargestellt.

Die Kolonne 100 umfasst einen Kolonnenkopf 101, einen über das Heizelement 116 beheizbaren Kolonnensumpf 102 und einen Kolonnenmantel 103. Innerhalb des Kolonnenmantels 103 sind entlang der Kolonnenachse 104 (dargestellt durch eine gestrichelte Linie) insgesamt vier Reaktionszonen 105a bis 105d und fünf Trennzonen 106a bis 106e in alternierender Anordnung übereinander angeordnet. Ein Ausschnitt der Kolonne 100 umfassend die Reaktionszone 105c und die Trennzone 106c ist vergrößert dargestellt.

In den Trennzonen 106a bis 106e befinden sich strukturierte Packungen, um den Stoff- und Wärmeaustausch zwischen flüssiger und gasförmiger Phase in der Kolonne zu optimieren. In den Reaktionszonen 105a bis 105d befindet sich jeweils ein ringförmiges Katalysatorbett 107a bis 107d, das um ein zentrales, mit der Kolonnenachse 104 zusammenfallendes Rohr 108a bis 108d angeordnet ist. Die Rohre 108a bis 108d dienen dazu, einem innerhalb der Kolonne nach oben gerichteten Gasstrom räumlich getrennt an den Katalysatorbetten 107a bis 107d vorbeizuführen. An ihren oberen Enden weisen die Rohre 108a bis 108d jeweils einen Auslass für aufsteigendes Gas auf.

Oberhalb dieser Auslässe sind die Gasverteiler 109a bis 109d angeordnet, die insbesondere dazu dienen, das aufsteigende Gas über den gesamten Kolonnenquerschnitt möglichst gleichmäßig zu verteilen, damit die Trennzonen 106b bis 106e mit möglichst breitem Querschnitt angeströmt werden. Oberhalb der Trennzonen 106a bis 106d befinden sich aus dem gleichen Grund die Verteiler 110a bis 110d für innerhalb der Kolonne nach unten strömende Flüssigkeit.

Gespeist werden diese Flüssigkeitsverteiler 110a bis 110d aus den Katalysatorbetten 107a bis 107d, in denen jeweils eine flüssige Silanmischung gestaut ist. Im Bodenbereich der Katalysatorbetten 107a bis 107d befindet sich jeweils ein Abfluss, der in die Rohre 111a bis 111d mündet, die durch den Kolonnenmantel 103 nach außen geführt sind. Außerhalb des Kolonnenmantels 103 steigen die Rohre 111a bis 111d jeweils senkrecht nach oben in Richtung des Kolonnenkopfes 101 bis hin zu einem Bogen 117 in Form eines umgekehrten "U", von dem aus sie senkrecht nach unten abfallen. Unterhalb der Reaktionszonen 105a bis 105d, aber oberhalb der erwähnten Flüssigkeitsverteiler 110a bis 110d, werden sie wieder durch den Kolonnenmantel 103 hindurch in die Kolonne 100 geführt und speisen dort die Flüssigkeitsverteiler 110a bis 110d mit flüssigen Chlorsilanen.

Eingespeist werden können Chlorsilane in die Kolonne 100 über dafür vorgesehene Einfüllstutzen (als Beispiel eines Zulaufs für ein zu disproportionierendes Chlorsilan oder Chlorsilangemisch), von denen bevorzugt jeweils einer oberhalb jeder Reaktionszone und oberhalb jeder Trennzone angeordnet ist. In dem vergrößerten Ausschnitt mit der Reaktionszone 105c und der Trennzone 106c sind beispielsweise die Einfüllstutzen 121 und 122 dargestellt.

Am oberen Ende des Kolonnenkopfs ist ein Auslass 123 für bei der Disproportionierung entstehendes Monosilan angeordnet. Unten am Kolonnensumpf findet sich ein Auslass 124 für bei der Disproportionierung entstehendes Tetrachlorsilan.

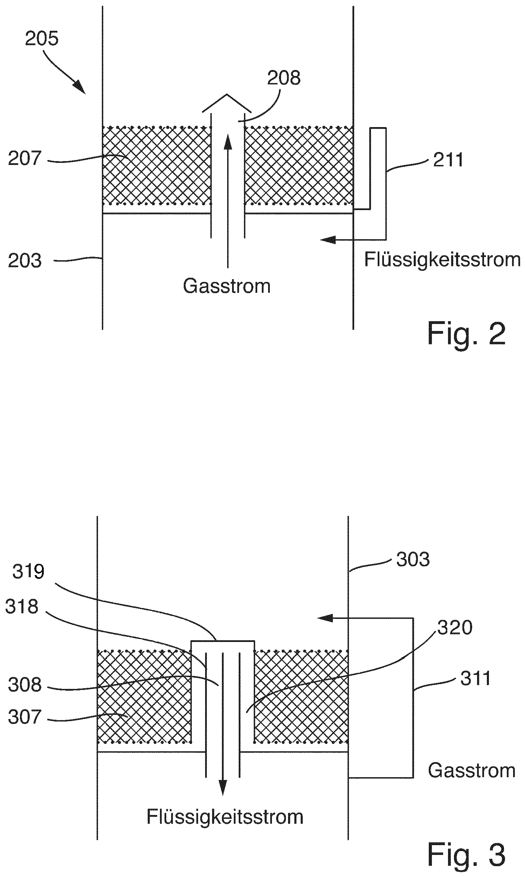

In Fig. 2 ist eine Ausführungsform einer Reaktionszone 205 einer erfindungsgemäßen Kolonne (Längsschnitt) schematisch dargestellt, bei der der Gasstrom innerhalb der Kolonne räumlich getrennt vom Flüssigkeitsstrom an einem Katalysatorbett 207 vorbeigeführt wird.

Die Kolonne weist hierzu ein zentrales Rohr 208 auf, das von dem Katalysatorbett 207 ringförmig umschlossen wird. Der Gasstrom wird durch das Rohr 208 vorbei am Katalysatorbett 207 nach oben geführt. Sich im Katalysatorbett 207 sammelnde Flüssigkeit wird dagegen über eine außerhalb des Kolonnenmantels 203 angeordnete Rohrleitung 211 aus der Reaktionszone 205 abgeführt. Diese durchbricht den Kolonnenmantel 203 knapp oberhalb des Bodens des Katalysatorbetts 207, steigt dann zunächst steil nach oben hin an bis hin zu einem Bogen in Form eines umgekehrten "U" und sinkt dann senkrecht ab. Unterhalb der Reaktionszone 205 wird es durch den Kolonnenmantel 203 wieder in die Kolonne geführt.

Eine weitere Ausführungsform einer Reaktionszone ist in Fig. 3 schematisch (Längsschnitt) dargestellt.

Hier wird der Gasstrom über ein abschnittsweise außerhalb des Kolonnenmantels 303 angeordnetes Rohr 311 am Katalysatorbett 307 der Reaktionszone 305 vorbeigeführt. Flüssigkeit aus dem Katalysatorbett 307 wird hingegen durch ein zentral in der Kolonne angeordnetes Ablaufrohr 308 nach unten abgeführt.

Das Ablaufrohr 308 ist als Doppelrohr ausgebildet mit einem inneren Rohr 318, einem äußeren Rohr 319 und einem durch den Außendurchmesser des inneren Rohrs und den Innendurchmesser des äußeren Rohrs definierten Ringspalt 320, wobei das äußere Rohr 319 an seinem oberen Ende geschlossen ist während das obere Ende des inneren Rohrs 318 offen und über den Ringspalt 320 mit dem Katalysatorbett 307 der Reaktionszone 305 in kommunizierender Verbindung steht. Sobald der Flüssigkeitspegel im Katalysatorbett 307 höher liegt als der Eintritt des Rohres 318, erfolgt ein Druckausgleich, indem Flüssigkeit über den Ringspalt 320 in das Rohr 318 gedrückt wird und nach unten abfließt.

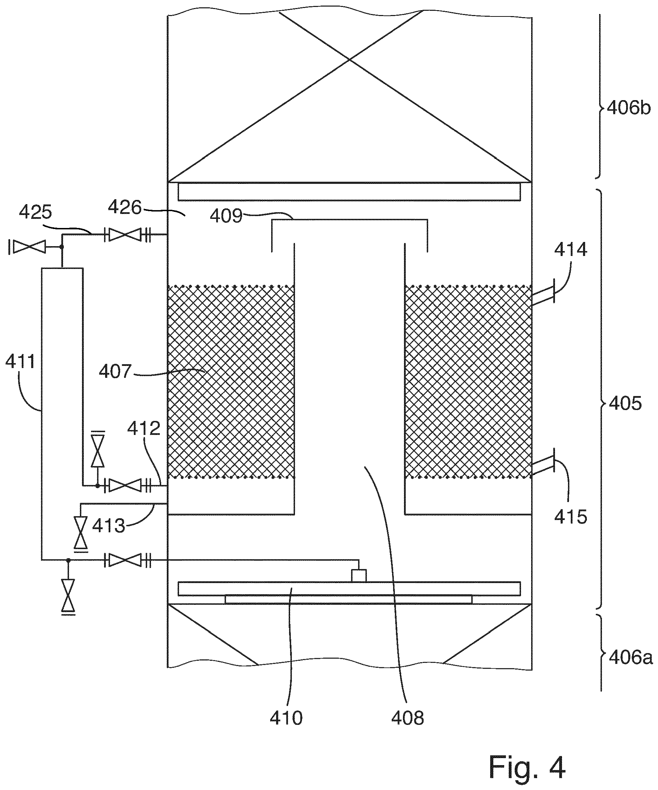

Ein Längsschnitt einer erfindungsgemäßen Kolonne (schematische Darstellung) ist ausschnittsweise in Fig. 4 dargestellt.

Dargestellt ist die Reaktionszone 405 sowie Teile der darüber und darunter angeordneten Trennzonen 406a (unten) und 406b (oben). In der Reaktionszone 405 befindet sich ein ringförmiges Katalysatorbett 407, das um das Rohr 408 herum angeordnet ist. Über den Zugang 413 kann Flüssigkeit in das Katalysatorbett 407 eingespeist werden, umgekehrt kann Flüssigkeit auf dem gleichen Weg aber auch aus dem Katalysatorbett 407 abgeführt werden. Bei 414 und 415 handelt es sich um verschließbare Öffnungen, um das Katalysatorbett 404 mit Katalysator zu befüllen oder Katalysator aus der Kolonne zu entnehmen.

Das Rohr 408 dient dazu, einem innerhalb der Kolonne nach oben gerichteten Gasstrom räumlich getrennt an dem Katalysatorbett 407 vorbeizuführen. An seinem oberen Enden weist das Rohr 408 einen Auslass für aufsteigendes Gas auf. Oberhalb dieses Auslasses ist der Gasverteiler 409 angeordnet, der insbesondere dazu dient, das aufsteigende Gas über den gesamten Kolonnenquerschnitt möglichst gleichmäßig zu verteilen, damit die Trennzone 406b mit möglichst breitem Querschnitt angeströmt wird. Oberhalb der Trennzonen 406a befindet sich aus dem gleichen Grund der Verteiler 410 für innerhalb der Kolonne nach unten strömende Flüssigkeit.

Gespeist wird der Flüssigkeitsverteiler 410 aus dem Katalysatorbett 407, in dem im Betrieb eine flüssige Silanmischung gestaut ist. Im Bodenbereich des Katalysatorbetts 407 befindet sich ein durch den das Katalysatorbett 407 seitlich begrenzenden Kolonnenmantel 403 führender Abfluss 412, der unmittelbar in die Rohrleitung 411 mündet. Diese ist zunächst senkrecht nach oben in Richtung eines (hier nicht sichtbaren) Kolonnenkopfes geführt, beschreibt dann jedoch einen Bogen in Form eines umgekehrten "U", von dem aus sie senkrecht nach unten abfällt. Unterhalb der Reaktionszonen 405, aber oberhalb des erwähnten Flüssigkeitsverteilers 410, wird die Rohrleitung 411 durch den Kolonnenmantel 403 hindurch in die Kolonne geführt und speist den Flüssigkeitsverteiler 410 mit flüssigen Chlorsilanen.

Am oberen Ende des Bogens geht die Verbindungsleitung 425 ab, über welche die Rohrleitung 411 mit dem Gasraum 426 oberhalb des Katalysatorbetts 407 verbunden werden kann. Über die Verbindungsleitung 425 kann gegebenenfalls ein Druckausgleich herbeigeführt werden, um ein Leersaugen des Katalysatorbetts 407 zu verhindern.

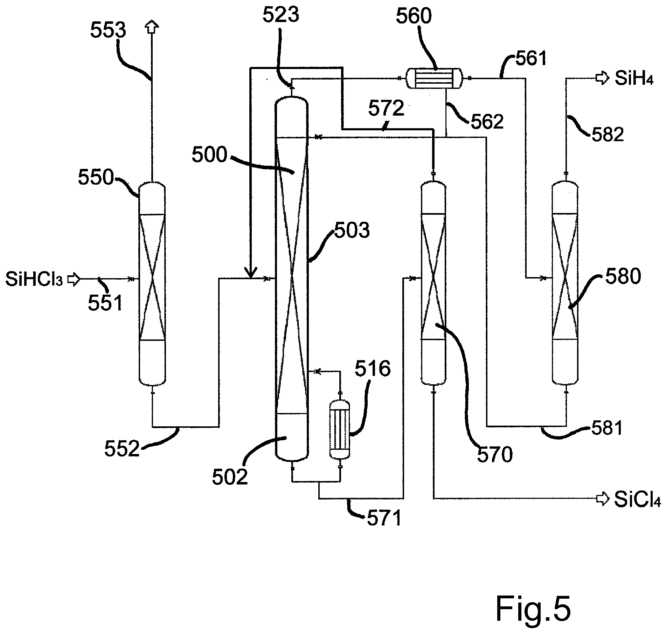

In Fig. 5 ist ein Fließschema einer Ausführungsform einer erfindungsgemäßen Anlage dargestellt. Diese umfasst eine Kolonne 500 zur Disproportionierung von Chlorsilanen, die gemäß der vorliegenden Erfindung ausgebildet ist, beispielsweise wie die in Fig. 1 dargestellte Kolonne. Die Kolonne 500 wird über die Leitung 552 mit Trichlorsilan gespeist, das in einem vorgeschalteten Schritt in der Destillations- oder Rektifikationsanlage 550 aufgereinigt wird. Gespeist wird die Anlage 550 mit Trichlorsilan über die Leitung 551. Trichlorsilan fällt im Kolonnensumpf an während leichtsiedende Verunreinigungen über die Leitung 553 ausgeschleust werden.

Die Kolonne 500 weist einen Kolonnenmantel 503 auf, in dem mehrere Reaktions-und Trennzonen alternierend angeordnet sind. Der Kolonnensumpf 502 wird über das Heizelement 516 indirekt beheizt. Zu diesem Zweck wird im Kreislauf Flüssigkeit aus dem Kolonnensumpf in das Heizelement und zurück in den Kolonnensumpf gepumpt. In aller Regel bildet sich im Kolonnensumpf eine Mischung aus Tetrachlorsilan und Trichlorsilan. In regelmäßigen Abständen oder kontinuierlich wird über die Leitung 571 ein Teil dieser Mischung in die Destillations- oder Rektifikationsanlage 570 überführt. In dieser erfolgt eine Trennung von Siliciumtetrachlorid und Trichlorsilan. Anfallendes Siliciumtetrachlorid wird aus dem Kolonnensumpf abgeführt. Trichlorsilan wird hingegen über die Leitung 572 wieder der Disproportionierungskolonne 500 zugeführt.

In der Kolonne 500 entstehendes monosilanhaltiges Reaktionsgemisch wird über die Leitung 523 aus dem Kolonnenkopf abgeführt. Eine erste Abtrennung mitgeschleppter Chlorsilane erfolgt mittels des Kondensators 560. Eine Rückführung abgetrennte Chlorsilane in die Kolonne 500 kann über die Leitung 562 erfolgen. Eine weitergehende Aufreinigung kann in der Destillations- oder Rektifikationsanlage 580 erfolgen, die mit dem Kondensator 560 über die Leitung 561 verbunden ist. In der Anlage 580 erfolgt eine Trennung von Monosilan und mitgeschleppten Chlorsilanen. Monosilan wird über die Leitung 582 aus dem Kolonnenkopf abgeführt. Abgetrennte Chlorsilane können über die Leitung 581 zum Zwecke weiterer Disproportionierung wieder in die Kolonne 550 überführt werden.

## Patentansprüche

1. Kolonne zur Disproportionierung von Chlorsilanen zu Monosilan und Tetrachlorsilan bei gleichzeitiger rektifikativer Auftrennung dabei erhaltener Silane mit den folgenden Merkmalen:
• Sie umfasst einen Kolonnenkopf, einen Kolonnensumpf und einen dazwischen angeordneten rohrförmigen Kolonnenmantel,
• sie umfasst innerhalb des Kolonnenmantels und entlang der Kolonnenachse mindestens zwei übereinander liegende Reaktionszonen, in denen jeweils ein Katalysatorbett angeordnet ist, wobei in den Katalysatorbetten Chlorsilane zu leichtsiedenden Silanen, die innerhalb der Kolonne einen aufsteigenden Gasstrom ausbilden, sowie zu vergleichsweise schwersiedenden Silanen, die nach Kondensation innerhalb der Kolonne einen nach unten gerichteten Flüssigkeitsstrom ausbilden, disproportionieren,
• sie umfasst innerhalb des Kolonnenmantels und entlang der Kolonnenachse mindestens zwei der rektifikativen Auftrennung dienende Trennzonen,
• die Reaktionszonen und die Trennzonen sind entlang der Kolonnenachse alternierend angeordnet,
• die Trennzonen sind derart ausgebildet, dass sich der Gasstrom und der Flüssigkeitsstrom in den Trennzonen begegnen, und
• die Reaktionszonen sind derart ausgebildet, dass der nach unten gerichtete Flüssigkeitsstrom durch die Katalysatorbetten geführt wird, wohingegen der nach oben gerichtete Gasstrom räumlich getrennt vom Flüssigkeitsstrom die Katalysatorbetten passiert, und
• sie umfasst Mittel, mit denen der durch die Katalysatorbetten geführte Flüssigkeitsstrom in den Katalysatorbetten kontrolliert gestaut werden kann und
• es sind entweder in den Böden der Katalysatorbetten Abläufe angeordnet, durch die in den Katalysatorbetten gestaute Flüssigkeit in eine darunter liegende Trennzone ablaufen kann, oder die Kolonne umfasst zumindest für jede über einer Trennzone angeordnete Reaktionszone eine Rohrleitung, die an einen in den Bodenbereich der Katalysatorbetten eingebrachten Ablauf angeschlossen ist, durch die in den Katalysatorbetten gestaute Flüssigkeit in eine darunter liegende Trennzone überführt werden kann.

2. Kolonne nach Anspruch 1, **dadurch gekennzeichnet, dass** die Reaktionszonen jeweils mindestens einen Gasdurchlass, bevorzugt einen rohrförmigen Gasdurchlass, aufweisen, durch welchen der Gasstrom die in den Reaktionszonen angeordneten Katalysatorbetten ungehindert (von unten nach oben) passieren kann.

3. Kolonne nach Anspruch 2, **dadurch gekennzeichnet, dass** es sich bei dem Gasdurchlass um ein Rohr handelt, dessen Achse mit der Kolonnenachse zusammenfällt.

4. Kolonne nach einem der Ansprüche 1 bis 3, **dadurch gekennzeichnet, dass** die Katalysatorbetten in den Reaktionszonen ringförmig um die Kolonnenachse, insbesondere ringförmig um die rohrförmigen Gasdurchlässe in den Reaktionszonen, angeordnet sind.

5. Kolonne nach einem der vorhergehenden Ansprüche, **dadurch gekennzeichnet, dass** zumindest ein Teilabschnitt der an den Ablauf angeschlossenen Rohrleitung außerhalb des Kolonnenmantels angeordnet ist.

6. Kolonne nach Anspruch 1, **dadurch gekennzeichnet, dass** die Rohrleitung in Richtung des Kolonnenkopfes ansteigt bevor sie einen Bogen in Form eines umgekehrten "U" beschreibt und in Richtung der darunter liegenden Trennzone abfällt.

7. Kolonne nach einem der vorhergehenden Ansprüche, **dadurch gekennzeichnet, dass** sie für jede unterhalb einer Reaktionszone angeordnete Trennzone einen Flüssigkeitsverteiler für den nach unten gerichteten Flüssigkeitsstrom umfasst, damit diese Trennzonen mit möglichst großem Querschnitt angeströmt werden können.

8. Kolonne nach Anspruch 7, **dadurch gekennzeichnet, dass** der Flüssigkeitsverteiler mit der zumindest abschnittsweise außerhalb des Kolonnenmantels angeordneten Rohrleitung einer darüber angeordneten Reaktionszone verbunden ist.

9. Kolonne nach Anspruch 1, **dadurch gekennzeichnet, dass** die mindestens zwei Reaktionszonen mindestens eines der folgenden Merkmale aufweisen:
• Sie weisen jeweils eine Ableitung auf, durch welche der Flüssigkeitsstrom aus den Katalysatorbetten in unter den Reaktionszonen angeordnete Trennzonen abfließen kann.
• Bei der Ableitung handelt es sich bevorzugt um ein Ablaufrohr, insbesondere ein Ablaufrohr, dessen Achse mit der Kolonnenachse zusammenfällt.
• Das Ablaufrohr wird ringförmig vom Katalysatorbett der jeweiligen Reaktionszone umschlossen.
• Das Ablaufrohr ist als Doppelrohr ausgebildet mit einem inneren Rohr, einem äußeren Rohr und einem durch den Außendurchmesser des inneren Rohrs und den Innendurchmesser des äußeren Rohrs definierten Ringspalt, wobei das äußere Rohr an seinem oberen Ende geschlossen ist während das obere Ende des inneren Rohrs offen und über den Ringspalt mit dem Katalysatorbett der jeweiligen Reaktionszone in kommunizierender Verbindung steht.
• Sie umfassen jeweils eine Rohrleitung, über die der Gasstrom am Katalysatorbett der jeweiligen Reaktionszone vorbei in die oberhalb der Reaktionszone angeordnete Trennzone geführt werden kann, wobei zumindest ein Teilabschnitt dieser Rohrleitung außerhalb des Kolonnenmantels angeordnet ist.

10. Kolonne nach einem der vorhergehenden Ansprüche, **dadurch gekennzeichnet, dass** innerhalb der Trennzonen Einbauten zur Intensivierung des Wärme- und Stoffaustauschs zwischen den sich begegnenden Gas- und Flüssigkeitsströmen angeordnet sind.

11. Kolonne mit mindestens einem weiteren der folgenden Merkmale:
• Einem dem Kolonnensumpf zugeordneten Heizelement
• Einem Kühlelement, das innerhalb des Kolonnenkopfs angeordnet oder mit ihm verbunden ist,
• Einem Zulauf für ein zu disproportionierendes Chlorsilan oder Chlorsilangemisch.
• Einem vorzugsweise im Bereich des Kolonnenkopfs angeordneten Auslass für bei der Disproportionierung entstehendes Monosilan,
• Einem Auslass für bei der Disproportionierung entstehendes Tetrachlorsilan.

12. Anlage zur Gewinnung von Monosilan, umfassend eine Kolonne nach einem der vorhergehenden Ansprüche sowie einen der Kolonne nachgeschalteten Kondensator und/oder eine der Kolonne nachgeschaltete Rektifikationseinrichtung.

13. Verfahren zur Disproportionierung von Chlorsilanen zu Monosilan und Tetrachlorsilan bei gleichzeitiger rektifikativer Auftrennung dabei erhaltener Silane, wobei
• das Verfahren in einer Kolonne durchgeführt wird, in der, entlang der Kolonnenachse, für die Disproportionierung vorgesehene Reaktionszonen und der rektifikativen Auftrennung dienende Trennzonen alternierend angeordnet sind,
• in den Reaktionszonen angeordnete Katalysatorbetten mit einem die Disproportionierung katalysierenden Katalysator befüllt werden,
• Chlorsilane in den Reaktionszonen mittels des Katalysators zu leichtsiedenden Silanen, die innerhalb der Kolonne einen aufsteigenden Gasstrom ausbilden, sowie zu vergleichsweise schwersiedenden Silanen, die nach Kondensation innerhalb der Kolonne einen nach unten gerichteten Flüssigkeitsstrom ausbilden, disproportioniert werden, und
• der Gasstrom und der Flüssigkeitsstrom derart durch die Kolonne geführt werden, dass sie sich in den Trennzonen begegnen, während in den Reaktionszonen der Flüssigkeitsstrom von oben nach unten durch die Katalysatorbetten geführt wird und der Gasstrom, räumlich getrennt vom Flüssigkeitsstrom, von unten nach oben die Katalysatorbetten passiert, und
• der durch die Katalysatorbetten geführte Flüssigkeitsstrom in den Katalysatorbetten kontrolliert gestaut wird, und
• in den Katalysatorbetten gestaute Flüssigkeit entweder über Abläufe in den Böden der Katalysatorbetten oder über Rohrleitungen, die an in die Bodenbereiche der Katalysatorbetten eingebrachte Abläufe angeschlossen sind, in eine darunter liegende Trennzone überführt wird.

14. Verfahren nach Anspruch 13, **dadurch gekennzeichnet, dass** für die Disproportionierung die folgenden Parameter in der Kolonne eingestellt werden:
• Die Temperatur in den Reaktionszonen wird auf einen Wert zwischen 10 °C und 200 °C eingestellt.
• Der Druck innerhalb der Kolonnen wird auf einen Wert zwischen 1 bar und 32 bar eingestellt.

## Claims

1. Column for disproportionation of chlorosilanes into monosilane and tetrachlorosilane coupled with simultaneous rectificative separation of the silanes obtained, having the following features:
• it comprises a column head, a column sump and a tube-shaped column shell disposed therebetween,
• it comprises, within the column shell and along the column axis, two or more reaction zones lying above each other which each accommodate a catalyst bed, in which catalyst beds chlorosilanes disproportionate into low-boiling silanes, which form an ascending stream of gas within the column, and also into comparatively high-boiling silanes which after condensation form a downwardly directed stream of liquid within the column,
• it comprises, within the column shell and along the column axis, two or more separation zones serving the purpose of rectificative separation,
• the reaction zones and the separation zones alternate along the column axis,
• the separation zones are configured such that the stream of gas and the stream of liquid meet in the separation zones, and
• the reaction zones are configured such that the downwardly directed stream of liquid is led through the catalyst beds, whereas the upwardly directed stream of gas passes the catalyst beds in spatial separation from the stream of liquid,and
• it comprises means whereby the stream of liquid led through the catalyst beds is dammable in the catalyst beds in a controlled manner and
• either drains are arranged in the trays of the catalyst beds, wherethrough liquid dammed in the catalyst beds can drain into a separation zone underneath, or the column comprises at least for every reaction zone above a separation zone a tubeline which is connected to a drain in the tray region of the catalyst beds and wherethrough liquid dammed in the catalyst beds is transferable into a separation zone underneath.

2. Column according to Claim 1, **characterized in that** the reaction zones each include one or more than one gas duct, preferably a tube-shaped gas duct, wherethrough the stream of gas is able to pass (upwardly) the catalyst beds in the reaction zones without hindrance.

3. Column according to Claim 2, **characterized in that** the gas duct is a tube whose axis coincides with the column axis.

4. Column according to any of Claims 1 to 3, **characterized in that** the catalyst beds in the reaction zones are in a ring-shaped arrangement around the column axis, in particular in a ring-shaped arrangement around the tube-shaped gas ducts in the reaction zones.

5. Column according to any preceding claim, **characterized in that** at least a partial section of the tubeline connected to the drain is outside the column shell.

6. Column according to Claim 1, **characterized in that** the tubeline goes up in the direction of the column head only to describe an arc in the shape of an inverted "U" and descend in the direction of the separation zone underneath.

7. Column according to any preceding claim, **characterized in that** it comprises for each separation zone underneath a reaction zone a liquid distributor for the downwardly directed stream of liquid to maximize the cross section of the flow coming into contact with these separation zones.

8. Column according to Claim 7, **characterized in that** the liquid distributor is in communication with the tubeline, at least sections of which are outside the column shell, of a reaction zone arranged thereabove.

9. Column according to Claim 1, **characterized in that** the two or more reaction zones include one or more of the following features:
• They each include a discharge wherethrough the stream of liquid is able to flow from the catalyst beds into separation zones underneath the reaction zones.
• The discharge is preferably a discharge tube, in particular a discharge tube whose axis coincides with the column axis.
• The discharge tube is ringed by the catalyst bed of the particular reaction zone.
• The discharge tube is configured as a double tube having an inner tube, an outer tube and an annular gap defined by the external diameter of the inner tube and the internal diameter of the outer tube, wherein the outer tube is sealed at its upper end while the upper end of the inner tube is open and is in communicating connection with the catalyst bed of the particular reaction zone via the annular gap.
• They each comprise a tubeline via which the stream of gas can be led past the catalyst bed of the particular reaction zone into the separation zone above the reaction zone, wherein at least a partial section of this tubeline is outside the column shell.

10. Column according to any preceding claim, **characterized in that** the separation zones accommodate internals to intensify the heat and mass transfer between the meeting streams of gas and liquid.

11. Column further having one or more of the following features:
• a heating element assigned to the column sump,
• a cooling element disposed within the column head or connected thereto,
• an inlet for a chlorosilane or chlorosilane mixture to be disproportionated,
• an outlet, preferably disposed in the region of the column head, for monosilane formed in the course of the disproportionation reaction,
• an outlet for tetrachlorosilane formed in the course of the disproportionation reaction.

12. Plant for recovery of monosilane, comprising a column according to any preceding claim and also a condenser downstream of said column and/or a rectification unit downstream of said column.

13. Process for disproportionation of chlorosilanes into monosilane and tetrachlorosilane coupled with simultaneous rectificative separation of the silanes obtained, wherein
• the process is carried out in a column in which, along the column axis, reaction zones for the disproportionation reaction and separation zones for the rectificative separation form an alternating arrangement,
• catalyst beds in the reaction zones are filled with a catalyst that catalyses the disproportionation reaction,
• in the reaction zones, by means of the catalyst, chlorosilanes disproportionate into low-boiling silanes, which form an ascending stream of gas within the column, and also into comparatively high-boiling silanes which after condensation form a downwardly directed stream of liquid within the column, and
• the stream of gas and the stream of liquid are led through the column such that they meet in the separation zones, whereas, in the reaction zones, the stream of liquid is led downwardly through the catalyst beds and the stream of gas passes the catalyst beds upwardly in spatial separation from the stream of liquid, and
• the stream of liquid led through the catalyst beds is dammed in the catalyst beds in a controlled manner, and
• liquid dammed in the catalyst beds is transferred into a separation zone underneath either via drains in the trays of the catalyst beds or via tubelines which are connected to drains in the tray regions of the catalyst beds.

14. Process according to Claim 13, **characterized in that** the disproportionation reaction is carried out with the following parameter settings in the column:
• The temperature in the reaction zones is set to a value between 10°C and 200°C.
• The pressure within the columns is set to a value between 1 bar and 32 bar.

## Revendications

1. Colonne pour la dismutation de chlorosilanes en monosilane et tétrachlorosilane avec séparation par rectification simultanée des silanes obtenus, présentant les caractéristiques suivantes :
- elle comprend une tête de colonne, un fond de colonne et une enveloppe de colonne tubulaire agencée entre ceux-ci,
- elle comprend à l'intérieur de l'enveloppe de la colonne et le long de l'axe de la colonne au moins deux zones de réaction superposées, dans chacune desquelles un lit catalytique est agencé, des chlorosilanes étant dismutés dans les lits catalytiques en silanes de point d'ébullition faible, qui forment un courant gazeux ascendant à l'intérieur de la colonne, ainsi qu'en silanes de point d'ébullition relativement élevé, qui forment après condensation un courant liquide dirigé vers le bas à l'intérieur de la colonne,
- elle comprend à l'intérieur de l'enveloppe de la colonne et le long de l'axe de la colonne au moins deux zones de séparation servant à la séparation par rectification,
- les zones de réaction et les zones de séparation sont agencées en alternance le long de l'axe de la colonne,
- les zones de séparation sont configurées de telle sorte que le courant gazeux et le courant liquide se rencontrent dans les zones de séparation, et
- les zones de réaction sont configurées de telle sorte que le courant liquide dirigé vers le bas soit acheminé au travers des lits catalytiques, tandis que le courant gazeux orienté vers le haut traverse les lits catalytiques séparément dans l'espace du courant liquide, et
- elle comprend des moyens avec lesquels le courant liquide acheminé au travers des lits catalytiques peut être retenu de manière contrôlée dans les lits catalytiques, et
- des évacuations sont agencées dans les fonds des lits catalytiques, par lesquelles le liquide retenu dans les lits catalytiques peut s'écouler dans une zone de séparation sous-jacente, ou la colonne comprend au moins une canalisation au moins pour chaque zone de réaction agencée au-dessus d'une zone de séparation, qui est raccordée à une évacuation disposée dans la zone de fond des lits catalytiques, par laquelle le liquide retenu dans les lits catalytiques peut être transféré dans une zone de séparation sous-jacente.

2. Colonne selon la revendication 1, **caractérisée en ce que** les zones de réaction comprennent chacune au moins un passage de gaz, de préférence un passage de gaz tubulaire, par lequel le courant gazeux peut traverser librement (du bas vers le haut) les lits catalytiques agencés dans les zones de réaction.

3. Colonne selon la revendication 2, **caractérisée en ce que** le passage de gaz consiste en un tube dont l'axe coïncide avec l'axe de la colonne.

4. Colonne selon l'une quelconque des revendications 1 à 3, **caractérisée en ce que** les lits catalytiques sont agencés dans les zones de réaction sous forme annulaire autour de l'axe de la colonne, notamment sous forme annulaire autour des passages de gaz tubulaires dans les zones de réaction.

5. Colonne selon l'une quelconque des revendications précédentes, **caractérisée en ce qu'**au moins une section de la canalisation raccordée à l'évacuation est agencée à l'extérieur de l'enveloppe de la colonne.

6. Colonne selon la revendication 1, **caractérisée en ce que** la canalisation monte dans la direction de la tête de la colonne, avant de tracer un coude sous la forme d'un « U » inversé et de descendre dans la direction de la zone de séparation sous-jacente.

7. Colonne selon l'une quelconque des revendications précédentes, **caractérisée en ce qu'**elle comprend un distributeur de liquide pour le courant liquide orienté vers le bas pour chaque zone de séparation agencée en dessous d'une zone de réaction, avec lequel ces zones de séparation peuvent être alimentées avec une section transversale aussi grande que possible.

8. Colonne selon la revendication 7, **caractérisée en ce que** le distributeur de liquide est raccordé avec la canalisation au moins partiellement agencée à l'extérieur de l'enveloppe de la colonne d'une zone de réaction agencée au-dessus.

9. Colonne selon la revendication 1, **caractérisée en ce que** lesdites au moins deux zones de réaction présentent au moins une des caractéristiques suivantes :
- elles comprennent chacune une conduite d'évacuation, par laquelle le courant liquide peut s'évacuer depuis les lits catalytiques dans les zones de séparation agencées en dessous des zones de réaction,
- la conduite d'évacuation consiste de préférence en un tube d'évacuation, notamment un tube d'évacuation dont l'axe coïncide avec l'axe de la colonne,
- le tube d'évacuation est entouré sous forme annulaire par le lit catalytique de la zone de réaction correspondante,
- le tube d'évacuation est configuré sous la forme d'un tube double comprenant un tube intérieur, un tube extérieur et un espace annulaire défini par le diamètre extérieur du tube intérieur et le diamètre intérieur du tube extérieur, le tube extérieur étant fermé à son extrémité supérieure, tandis que l'extrémité supérieure du tube intérieur est ouverte et se trouve en liaison communicante par le biais de l'espace annulaire avec le lit catalytique de la zone de réaction correspondante,
- elles comprennent chacune une canalisation, par laquelle le courant gazeux peut être acheminé au-delà du lit catalytique de la zone de réaction correspondante dans la zone de séparation agencée au-dessus de la zone de réaction, au moins une section de cette canalisation étant agencée à l'extérieur de l'enveloppe de la colonne.

10. Colonne selon l'une quelconque des revendications précédentes, **caractérisée en ce que** des composants intérieurs pour l'intensification de l'échange de chaleur et de matière entre les courants gazeux et liquides qui se rencontrent sont agencés à l'intérieur des zones de séparation.

11. Colonne présentant au moins une autre des caractéristiques suivantes :
- un élément chauffant attribué au fond de la colonne,
- un élément réfrigérant, qui est agencé dans la tête de la colonne ou raccordé avec celle-ci,
- une alimentation pour un chlorosilane ou mélange de chlorosilanes à dismuter,
- une sortie de préférence agencée dans la zone de la tête de la colonne pour le monosilane formé lors de la dismutation,
- une sortie pour le tétrachlorosilane formé lors de la dismutation.

12. Unité pour l'obtention de monosilane, comprenant une colonne selon l'une quelconque des revendications précédentes, ainsi qu'un condensateur raccordé en aval de la colonne et/ou un dispositif de rectification raccordé en aval de la colonne.

13. Procédé de dismutation de chlorosilanes en monosilane et tétrachlorosilane avec séparation par rectification simultanée des silanes obtenus, selon lequel
- le procédé est réalisé dans une colonne dans laquelle des zones de réaction prévues pour la dismutation et des zones de séparation servant à la séparation par rectification sont agencées en alternance le long de l'axe de la colonne,
- des lits catalytiques agencés dans les zones de réaction sont remplis avec un catalyseur catalysant la dismutation,
- des chlorosilanes sont dismutés dans les zones de réaction au moyen du catalyseur en silanes de point d'ébullition faible, qui forment un courant gazeux ascendant à l'intérieur de la colonne, ainsi qu'en silanes de point d'ébullition relativement élevé, qui forment après condensation un courant liquide dirigé vers le bas à l'intérieur de la colonne, et
- le courant gazeux et le courant liquide sont acheminés dans la colonne de telle sorte qu'ils se rencontrent dans les zones de séparation, tandis que le courant de liquide est acheminé du haut vers le bas au travers des lits catalytiques dans les zones de réaction et que le courant gazeux traverse les lits catalytiques du bas vers le haut séparément dans l'espace du courant liquide, et
- le courant liquide acheminé au travers des lits catalytiques est retenu de manière contrôlée dans les lits catalytiques, et
- le liquide retenu dans les lits catalytiques est transféré dans une zone de séparation sous-jacente par des évacuations dans les fonds des lits catalytiques ou par des canalisations qui sont raccordées à des évacuations disposées dans les zones de fond des lits catalytiques.

14. Procédé selon la revendication 13, **caractérisé en ce que** les paramètres suivants sont ajustés dans la colonne pour la dismutation :
- la température dans les zones de réaction est ajustée à une valeur comprise entre 10 °C et 200 °C,
- la pression dans la colonne est ajustée à une valeur comprise entre 1 bar et 32 bar.
